# EUROPEAN PATENT SPECIFICATION

(11) **EP 1 128 986 B1**
(45) Date of publication and mention of the grant of the patent: **08.10.2003**
(21) Application number: 99971768.9
(22) Date of filing: 09.11.1999
(51) Int. Cl.: B60R 1/06

(54) **ELECTRICALLY CONTROLLED MIRROR FOR A MOTOR VEHICLE**
ELEKTRISCH GESTEUERTER KRAFTFAHRZEUG- RÜCKBLICKSPIEGEL
RETROVISEUR A COMMANDE ELECTRIQUE POUR VEHICULE A MOTEUR

(30) Priority: 09.11.1998 NL 1010513
(43) Date of publication of application: 05.09.2001
(73) Proprietor: IKU Holding Montfoort B.V., 3417 XJ Montfoort (NL)
(72) Inventor: POST, Paul, Wessel, NL-8021 CD Zwolle (NL); NIJMEIJER, Marco, Raymond, Maria, NL-3532 VD Utrecht (NL); OENEMA, Onno, Dirk, NL-3533 VP Utrecht (NL)
(74) Representative: Prins, Adrianus Willem
(86) International application number: NL9900685
(87) International publication number: WO00027670

(56) References cited:
- EP-A- 0 274 848
- EP-A- 0 476 600
- EP-A- 0 531 944
- EP-A- 0 845 390
- EP-A- 0 985 579
- WO-A-90/10555
- DE-A- 3 923 932
- DE-A- 4 011 934
- DE-A- 4 219 930
- DE-A- 4 422 572
- DE-C- 2 813 316

## Description

The present invention relates to an electrically controlled mirror for a motor vehicle, provided with a support to be mounted on a vehicle for a mirror housing having a mirror plate movable in said mirror housing and electromechanical means for adjusting the mirror housing relative to the support and the mirror plate relative to the mirror housing, and with any means for accommodating one or more other functions, such as mirror heating, electrochrome dimming of light falling on the mirror plate, various lighting functions, remote control means, etc. in the mirror housing, the mirror housing comprising one single build-up element on which said means are provided. Such a mirror is known from DE 40 11 934.

The intermediate document EP-A-985 579 describes an an electrically controlled mirror for a motor vehicle, provided with a support to be mounted on a vehicle for a mirror housing having a mirror plate movable in said mirror housing and electromechanical means for adjusting the mirror housing relative to the support and the mirror plate relative to the mirror housing, and with any means for accommodating one or more other functions, such as mirror heating, electrochrome dimming of light falling on the mirror plate, various lighting functions, remote control means, etc. in the mirror housing, the mirror housing comprising one single build-up element on which said means are provided, a reinforcement element being provided in the build-up element for increasing the rigidity and strength of the build-up element.

The current development in the field of mirrors for motor vehicles is directed to accommodating a large number of functions in the mirrors of the type known from DE 40 11 934. Apart from the primary mirror functions, i.e. the electric control of the mirror housing relative to its support on the vehicle, and of the mirror plate relative to the mirror housing, there is the need to accommodate other functions in the mirror housing as well, in particular a mirror heating, the electrochrome dimming of the light falling on the mirror plate, for instance if a vehicle coming from behind has its lights adjusted incorrectly and shines too much in one's own mirrors, all types of lighting functions, such as for instance an indicator or a downwardly shining lamp (puddle light) and even remote control means for, for instance, unlocking the vehicle remotely. Such multiplicity of functions does not only require all kinds of mechanical constructional adaptations with regard to the components that have to be accommodated in the mirror housing for realizing the various functions, but also requires all kinds of electronics and a relatively large cable tree that should be introduced into the mirror housing.

However, against this increase of the number of functions that are to be accommodated in a mirror, is the aim to reduce the system costs and to increase the quality and reliability of the product, which requirements are usually difficult to match.

The object of the invention is to provide an electrically controlled mirror for a motor vehicle, in which, in a constructional sense, the possibility of realizing a large number of functions in the mirror housing is offered in a simpler manner, while in addition, the system costs are limited and the quality and reliability of the product are increased.

To that end, in accordance with the invention, the electrically controlled mirror as described in the opening paragraph is characterized in that a reinforcement element is provided in the build-up element for increasing the rigidity and strength of the build-up element and in that the build-up element has a space in which an electronics unit for controlling the various functions is accommodated.

Whereas formerly, the means for adjusting the mirror housing relative to the support, the means for adjusting the mirror plate relative to the mirror housing, and the means for realizing the desired other functions in the mirror housing had to be incorporated into the mirror housing as separate components, the invention provides one single build-up element on which the various components, whose individual housings have been removed, can be directly provided; in other words, the housing of at least a number of these components is of common design. By forming the build-up element as one whole and manufacturing it from a plastic, a type of this common housing is obtained that has favorable manufacturing costs. The reinforcement element is preferably made of metal and is in particular insert-molded in the plastic build-up element in wholly or partially folded condition. This further contributes to the strength of the build-up element. Although the reinforcement element may also be formed from other materials, for instance a glass fiber-reinforced plastic, the use of metal offers the great advantage that the reinforcement element can be designed as a multi-core electric conductor for the functions to be realized in the mirror housing by means of the above-mentioned means. In other words, the electric cable work for the various components can also be integrated into the build-up element, so that in the mirror housing no separate cables need to be passed to the various components.

In particular because of the plastic construction, various spaces can be provided in the build-up element during molding. For instance, the build-up element may have a space accommodating an electronics unit for controlling the various functions. Thus, the electronics of the separate components can be concentrated in one space to enable an integrated design of these electronics, such as for instance with a common microprocessor, by means of which the control of the various functions in the mirror housing can be realized.

Further, the build-up element may have a space for the means for adjusting the mirror plate relative to the mirror housing. These means may comprise, in a known manner, two motors, transmission members and spindles for rotating the mirror support having a mirror plate provided thereon about two mutually perpendicular axes. These means are normally secured on a mounting plate in a separate housing. However, in accordance with the invention, the mounting plate can be secured directly on the build-up element.

In a preferred embodiment, the build-up element has one space for both the electronics unit for controlling the various functions, and the means for adjusting the mirror plate relative to the mirror housing. The electronics unit for controlling the various functions comprises a printed circuit board which, preferably, is connected to said mounting plate or forms a whole therewith. In particular, at least a part of the electronics of the electronics unit may be located on the other side of the mounting plate where the means for adjusting the mirror plate relative to the mirror housing are provided.

Further, the build-up element may have a space in which, in cooperation with a space in a mounting base element in the support, the means for adjusting the mirror housing relative to the support are accommodated. Hence, both elements surround said means, consisting of a motor and a transmission mechanism for rotating the mirror housing around a shaft in the support. By giving this shaft a hollow design, the cable work of the mirror can be passed therethrough from the vehicle and connected to the electric conductor integrated into the build-up element.

It is further observed that in the build-up element, one or more further spaces for lighting means may be present. For instance, a lamp fitting may be directly provided in a space in the build-up element.

When all components have to be provided in the mirror housing as separate units, they will also be separately wired. This means for instance one cable having two cores for the means for adjusting the mirror housing relative to the support on the vehicle, one cable having six cores for the means for adjusting the mirror plate relative to the mirror housing, one cable having two cores for a puddle light, one cable having three cores for the mirror heating and the electrochrome dimming, etc. Through the use of a common electronics unit, the number of cables can be reduced and, when integrated into the build-up element, be limited to one strip-shaped conductor. In accordance with the invention, the number of cores in this strip-shaped electric conductor can be further limited; to this end, the electric conductor comprises an input conductor having two feed lines and at least one data line. Over the data line or lines, digital serial information is passed on multiplex basis from the vehicle to the electronics unit and control signals are provided by this electronics unit over relevant cores in the electric conductor for controlling the various components in the mirror housing.

In accordance with a further facet of the invention, the cable work of the mirror can be connected from the vehicle, via the space in the mounting base element in the support, to the electric conductor integrated into the build-up element. In this regard, a particularly simple connection is obtained when the connection of the cable work from the vehicle to the electric conductor extends through the shaft via which the mirror housing can rotate relative to the support on the vehicle. In a concrete embodiment, a connected is provided in said shaft, to which connector the cable work from the vehicle is connected, while the electric conductor comprises a plug which, when the build-up element is being slid over the mounting base element, is plugged into the connector. The connector with the cable work connected thereto from the vehicle can for instance be provided in said shaft by a bayonet joint. Of course, the connector may also be connected to the electric conductor and inserted into that part of the build-up element, for instance again by a bayonet joint, which is slid over the mounting base element, while during the sliding of the build-up element over the mounting base element, a plug at the end of the cable work coming from the vehicle is plugged into the connector.

As mentioned, the means for adjusting the mirror plate relative to the mirror housing may be provided on a mounting plate. In accordance with yet another facet of the invention, the space for these means may then comprise projecting, pin-shaped parts which form one whole with the build-up element and on which the mounting plate can be fixed by a clip connection. Such clip connection can in particular be obtained by a clip fixedly provided on the mounting plate.

In a specific embodiment, these pin-shaped parts comprise a widened portion and, adjacent their free ends, a narrowed portion, while the mounting plate slid over the narrowed portion is clamped between the upper edge of said widened portion and a cover element which is present for the drive means to be provided on the mounting plate for adjusting the mirror plate, the cover element being secured by a clip connection. In the same manner as in the above-mentioned embodiment where the clip is fixedly provided on the mounting plate, the clip connection can here be obtained by a clip fixedly provided on the cover element.

The invention will now be specified with reference to the accompanying drawings. In these drawings:
Fig. 1 is a side elevation of the build-up element according to the invention;
Fig. 2 shows the method in which the multi-core electric conductor is integrated into the build-up element;
Fig. 3 is an exploded view of the build-up element and the mounting base element meshing therewith; while
Fig. 4 shows the manner in which the mounting plate can be secured in the build-up element.

In the Figures, identical parts are denoted by identical reference numerals.

The Figures show from various sides the build-up element 1 according to the invention as it can be secured in a mirror housing which can be rotatably attached to a support fixedly connected to a vehicle. This mirror housing has a mirror plate provided therein for movement, and also contains electromechanical means for adjusting the mirror housing relative to the support and the mirror plate relative to the mirror housing.

The electromechanical means for adjusting the mirror housing relative to the support comprise a motor and a transmission mechanism engaging a shaft on the support; these means are in practice and also hereinafter referred to as 'power-fold unit'. The electromechanical means for adjusting the mirror plate relative to the mirror housing comprise two motors fixed on a mounting plate, an associated transmission mechanism and spindles for rotating the mirror plate about two mutually perpendicular axes around a pivot point, formed by a ball joint provided between the mounting plate and the mirror plate; these means are in practice and also hereinafter referred to as 'mirror actuator'. Such electromechanical means are known.

Further, various other functions can be accommodated in the mirror housing; in the present embodiment, means are present for realizing mirror heating, electrochrome dimming of light falling on the mirror plate and a 'puddle' lighting. These means, too, are all known per se.

As the present invention relates to the construction and positioning of all these means in the mirror housing rather than to the operation thereof, the operation will not be discussed any further, unless this is necessary for the explanation of the present invention.

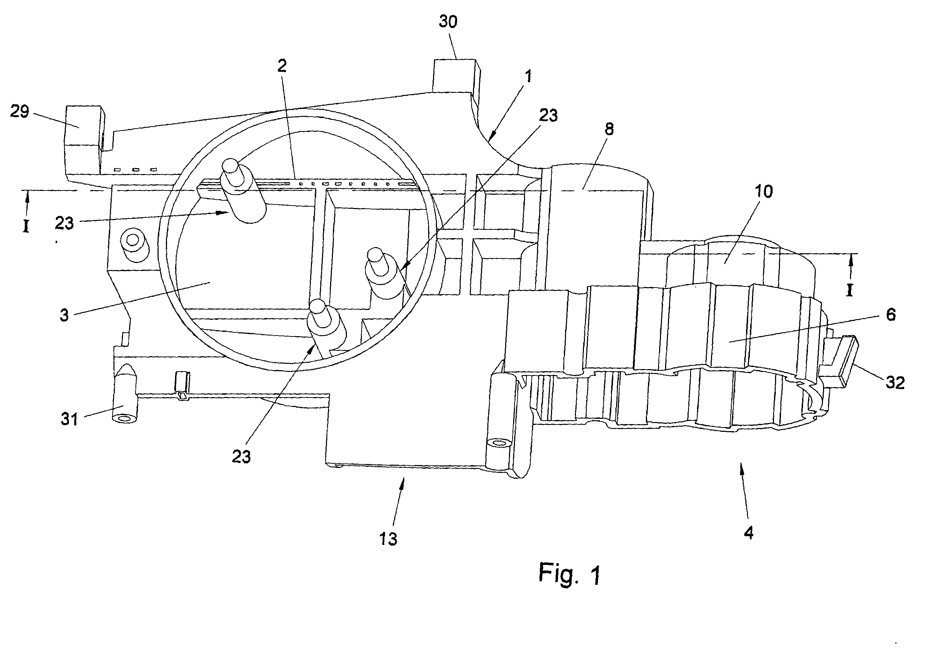

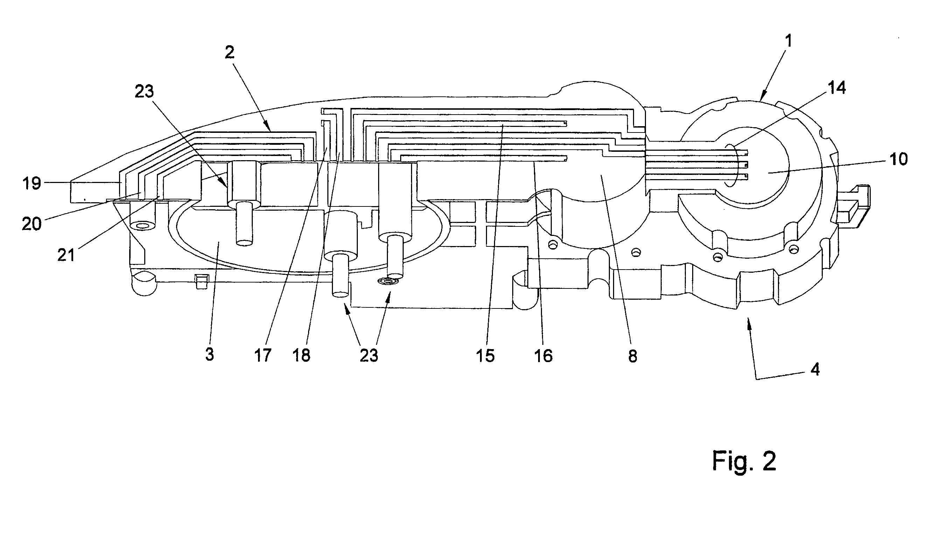

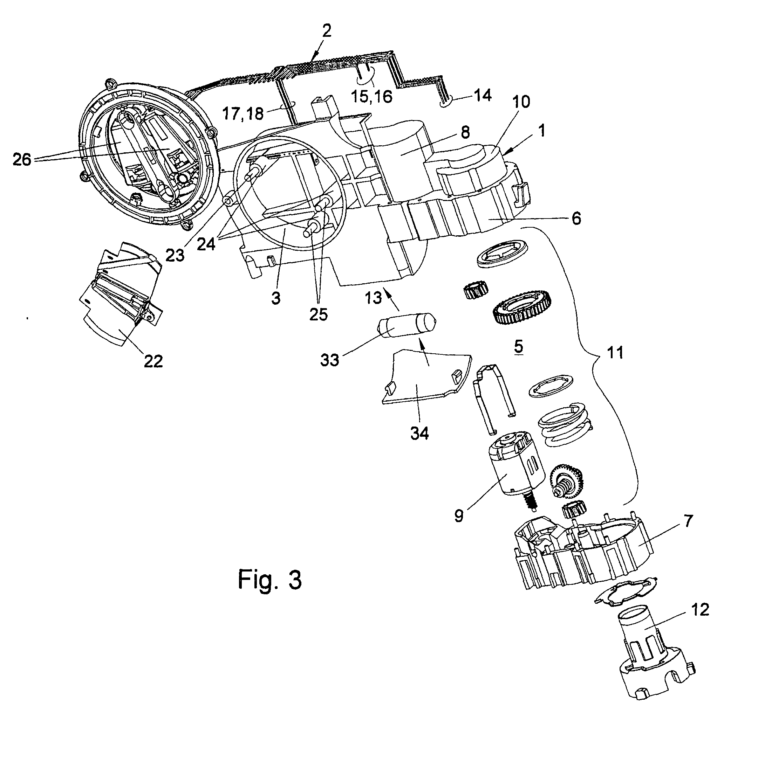

The build-up element 1 is molded from a synthetic material, in particular from a hard type of plastic. Insert-molded in the build-up element 1 is a multi-core electric conductor 2 in the form of a strip. Fig. 2 depicts the build-up element 1, substantially viewed from the top side, with the upper portion thereof removed according to the line I-I in Fig. 1, to enable a top plan view of the electric conductor 2. The strip-shaped conductor, folded more than once, is integrated into the build-up element, as appears from Fig. 3, where the conductor 2, lifted from the build-up element 1, is shown. In particular, this Figure demonstrates that parts of the strip-shaped conductor are folded over in different manners, depending on the place in the build-up element where the relevant conductor parts are to be guided to. By arranging the conductor 2 in this manner, the rigidity and strength of the build-up element are moreover increased.

The build-up element 1 has various hollow spaces. For instance, a cylindrical space 3 is present both for the means for adjusting the mirror plate relative to the mirror housing, i.e. for the mirror actuator, and for the electronics unit for controlling the various functions. For that purpose, the mirror actuator and the electronics unit are mounted on a mounting plate, with the mirror actuator and a part of the electronics unit provided on one side, and the other portion of the electronics unit provided on the other side of the mounting plate. The mounting plate is fixed adjacent the top side of the hollow space 3. The electric conductor 2 partly extends through this hollow space 3, as a result of which the connecting points of the separate cores of this conductor lie directly against the connections of the electronics unit on the mounting plate and the soldered or welded joints can readily be realized. This will be discussed in more detail hereinbelow.

There is further present a hollow space 4 for the means for adjusting the mirror housing relative to the support, i.e. for the power-fold unit 5. An edge 6 bounding this space at the bottom side thereof can be slid over a mounting base element 7 (see Fig. 3) rotatably mounted in the support which is to be fixed on a vehicle. The space that is formed by the hollow space 4 in the build-up element 1 and the hollow space in the mounting base element 7 after these two elements have been slid one into the other, comprises two portions, viz. a high portion 8 for the motor 9 of the power-fold unit 5 and a low portion 10 for the transmission mechanism 11 thereof. This transmission mechanism 11 engages a hollow central shaft 12 fixed on the support on the vehicle. Such transmission mechanism is described in detail in, for instance, International Patent Application WO 97/43144.

Further present in the build-up element 1 is a hollow space 13 in which a fitting for a puddle light 33 can be provided. This hollow space 13 can be shut off by a light-transmitting cover plate 34.

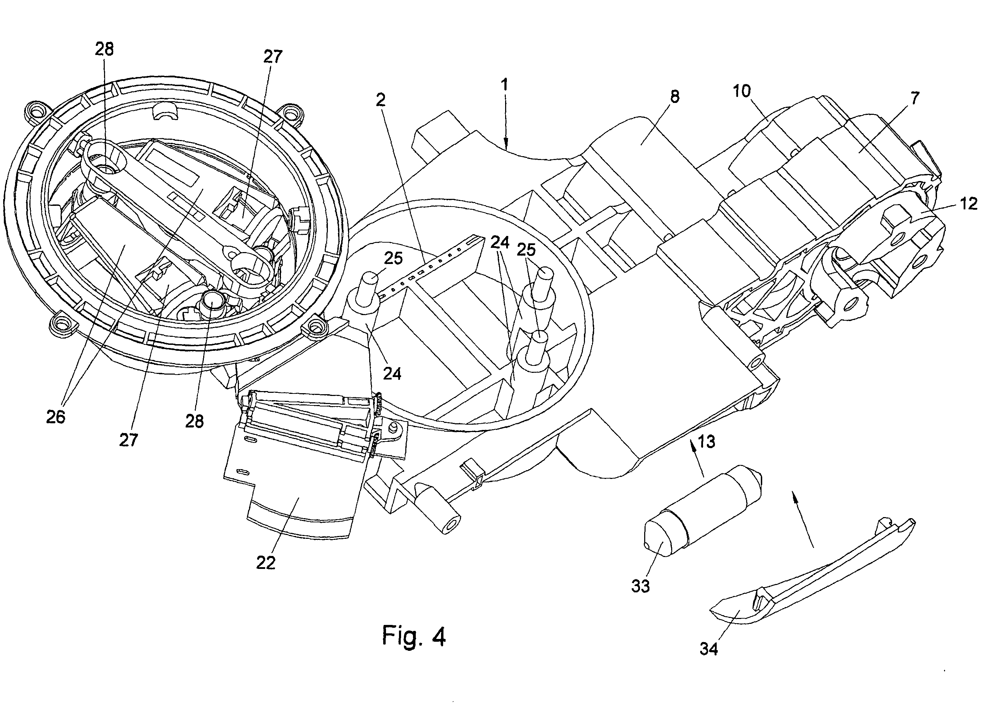

The strip-shaped multi-core electric conductor 2 as visible from the top in Fig. 2 comprises an input conductor 14 which in the exemplary embodiment shown comprises three cores, viz. two feed lines and one data line suitable for transmitting digital serial information on multiplex basis. When the mirror is being mounted on the vehicle, the input conductor 14 should be connected to the cable work extending from the vehicle through the support of the mirror housing and in particular through the hollow shaft 12. Provided in this hollow shaft 12 is a connector for said cable work, to which connector the plug at the end of the input conductor 14 is connected when the build-up element 1 is being slid over the mounting base element 7. To that end, the three-core strip-shaped input conductor 14 extends through an opening in the top side of the build-up element 1 at the location of the top side of the low portion 10 of the hollow space 4, to the connection in the hollow shaft 12. The other end of the three-core input conductor 14 ends in the hollow space 3 for connection to the electronics unit on the mounting plate therein. Via an opening in the top side of the high portion 8 of the hollow space 4, two cores 15, 16 of the strip-shaped conductor 2 extend from this electronics unit to the motor of the power-fold unit 5. Further, via an opening in the top side of the build-up element 1, two cores 17, 18 extend from the electronics unit downwards behind the hollow space 3 to the hollow space 13 for the puddle light 33. Finally, three further cores 19, 20 and 21 are present which extend rightwards from the electronics unit in Fig. 2 and to which the connections for the mirror heating and the electrochrome dimming can be connected. Fig. 3 shows how the strip-shaped conductor 2 is split into different parts and how, folded in a specific manner, it is insert-molded in the build-up element during the manufacture thereof. When the electronics unit has been fixed in the hollow space 3, the ends of the ten cores of the strip-shaped conductor 2 project through the printed circuit board of the electronics unit and are fixedly soldered thereon to the relevant electronics components; see Fig. 4. Here, the printed circuit board forms a part of the mounting plate 22. However, it will be understood that the printed circuit board and the mounting plate can be constructed separately from each other, while they may actually be directly connected to each other.

During the molding of the build-up element 1, projecting pin-shaped parts 23 are formed at the same time. These pin-shaped parts have a widened portion 24 and, adjacent their free ends, a narrowed portion 25. Although the mounting plate 22 can be secured directly on these pin-shaped parts by a clip connection, with the mounting plate being slid over the narrowed portion 25 of the pin-shaped parts 23 and clamped between the top side of the widened portions 24 and the clips present therefor, while the clips may or may not further be fixedly mounted on the mounting plate, in the exemplary embodiment shown it is not the mounting plate 22 itself but a cover element 26 (see Figs. 3 and 4), present for the mirror actuator 27 to be provided on the mounting plate 22, that is secured by a clip connection 28, which can again be obtained by clips fixed on the cover element. As the mirror actuator is directly secured on the mounting plate in the hollow space 3, a separate actuator housing, which would be present if the mirror actuator were mounted in the mirror housing as a separate component, can be dispensed with.

Finally, it is observed that the build-up element 1 comprises a number of mounting lips 29-32, whereby the build-up element can be secured in a mirror housing.

The invention is not limited to the exemplary embodiment here described with reference to the Figures, but also relates to all kinds of modifications hereto, of course in so far as they fall within the protective scope of the following claims. For instance, instead of one, two data lines may be used, the number of cores in the strip-shaped conductor 2 may be extended if more functions have to be accommodated in the mirror, such as for instance an indicator, remote control means or an antenna system. Of course, for these provisions space must be created in the build-up element, so that the functions thus obtained need not be arranged in the form of a component which is to be separately mounted in the mirror housing, in a housing of its own and with its own cable work. Further, it will be understood that the shape and size of the build-up element are determined by the number of functions to be accommodated in the mirror housing and the maximally acceptable size of the mirror housing; in the electronics unit itself, there prove to be no limitations in practice.

## Claims

1. An electrically controlled mirror for a motor vehicle, provided with a support to be mounted on a vehicle for a mirror housing having a mirror plate movable in said mirror housing and electromechanical means for adjusting the mirror housing relative to the support and the mirror plate relative to the mirror housing, and with any means for accommodating one or more other functions, such as mirror heating, electrochrome dimming of light falling on the mirror plate, various lighting functions, remote control means, etc. in the mirror housing, the mirror housing comprising one single build-up element (1) on which said means are provided, **characterized in that** a reinforcement element (2) is provided in the build-up element (1) for increasing the rigidity and strength of the build-up element (1) and **in that** the build-up element has a space (3) in which an electronics unit for controlling the various functions is accommodated.

2. An electrically controlled mirror according to claim 1, **characterized in that** the build-up element forms one whole and is manufactured from a plastic, the reinforcement element (2) being made of metal and insert-molded, in wholly or partially folded condition, in the plastic build-up element (1).

3. An electrically controlled mirror according to claim 2, **characterized in that** the reinforcement element (2) forms a multi-core electric conductor for the functions to be realized in the mirror housing by said means.

4. An electrically controlled mirror according to any one of the preceding claims, **characterized in that** the build-up element (1) has a space (4) for the means (27) for adjusting the mirror plate relative to the mirror housing.

5. An electrically controlled mirror according to any one of the preceding claims, **characterized in that** the build-up element has one space (3) for both the electronics unit for controlling the various functions and the means for adjusting the mirror plate relative to the mirror housing.

6. An electrically controlled mirror according to any one of the preceding claims, **characterized in that** the build-up element has a space (3) in which, in cooperation with a space in a mounting base element in the support, the means for adjusting the mirror housing relative to the support are accommodated.

7. An electrically controlled mirror according to any one of the preceding claims, **characterized in that** the build-up element (11) has one or more further spaces (13) for lighting means (33).

8. An electrically controlled mirror according to any one of the preceding claims, **characterized in that** the electric conductor comprises an input conductor (14) with two feed lines and at least one data line.

9. An electrically controlled mirror according to claim 8, **characterized in that** over the data line or lines, digital serial information is passed on multiplex basis from the vehicle to the electronics unit and control signals are provided by this electronics unit over relevant cores in the electric conductor for controlling the various components in the mirror housing.

10. An electrically controlled mirror according to any one of the preceding claims, **characterized in that** via the space in the mounting base element in the support, the cable work of the mirror can be connected from the vehicle to the electric conductor integrated into the build-up element (1).

11. An electrically controlled mirror according to claim 10, **characterized in that** the connection of the cable work from the vehicle to the electric conductor extends through the shaft via which shaft (12) the mirror housing can rotate relative to the support on the vehicle.

12. An electrically controlled mirror according to claim 11, **characterized in that** in said shaft a connector (14) is provided to which the cable work from the vehicle is connected and that the electric conductor comprises a plug which, when the build-up element is being slid over the mounting base element, is plugged into the connector (14).

13. An electrically controlled mirror according to claims 4 and 5, **characterized in that** the means for adjusting the mirror plate relative to the mirror housing are provided on a mounting plate (22) and that the space for these means comprises projecting, pin-shaped parts (23) which form one whole with the build-up element (1) and on which the mounting plate (22) can be secured by a clip connection (28).

14. An electrically controlled mirror according to claim 13, **characterized in that** the clip connection (28) is obtained by a clip fixedly provided on the mounting plate.

15. An electrically controlled mirror according to claim 13, **characterized in that** the pin-shaped parts (23) comprise a widened portion (24) and, adjacent the free end, a narrowed portion (25), the mounting plate which has been slid over the narrowed portion being clamped between the top edge of said widened portion and a cover element (26) present for the driving means (27) for adjusting the mirror plate, which driving means (27) are to be provided on the mounting plate (22), the cover element being secured by a clip connection.

16. An electrically controlled mirror according to claim 15, **characterized in that** the clip connection (28) is obtained by a clip fixedly provided on the cover element.

17. An electrically controlled mirror according to any one of claims 13-16, **characterized in that** the electronics unit for controlling the various functions is provided on the mounting plate (22).

18. An electrically controlled mirror according to claim 13, **characterized in that** at least a part of the electronics of the electronics unit is located on the other side of the mounting plate (22) where the means (27) for adjusting the mirror plate relative to the mirror housing are provided.

## Patentansprüche

1. Elektrisch gesteuerter Spiegel für ein Kraftfahrzeug, der mit einem an einem Fahrzeug zu befestigenden Träger für ein Spiegelgehäuse, das eine in dem Spiegelgehäuse bewegbare Spiegelplatte und elektromechanische Mittel zur Einstellung des Spiegelgehäuses in Bezug auf den Träger und der Spiegelplatte in Bezug auf das Spiegelgehäuse aufweist, und mit beliebigen Mitteln versehen ist, die dazu dienen, eine oder mehrere andere Funktionen, wie beispielsweise Spiegelheizung, elektrochromes Abdunkeln eines auf die Spiegelplatte einfallenden Lichts, verschiedene Beleuchtungsfunktionen, Fernsteuerungsmittel etc. in dem Spiegelgehäuse unterzubringen, wobei das Spiegelgehäuse ein einziges Aufbauelement (1) aufweist, an dem die Mittel angeordnet sind, **dadurch gekennzeichnet, dass** in dem Aufbauelement (1) zur Erhöhung der Steifigkeit und der Festigkeit des Aufbauelements (1) ein Verstärkungselement (2) vorgesehen ist und dass das Aufbauelement einen Freiraum (3) aufweist, in dem eine Elektronikeinheit zur Steuerung der verschiedenen Funktionen untergebracht ist.

2. Elektronisch gesteuerter Spiegel nach Anspruch 1, **dadurch gekennzeichnet, dass** das Aufbauelement einen einstückigen Körper bildet und aus Kunststoff hergestellt ist, wobei das Verstärkungselement (2) aus Metall gefertigt und in einem vollständig oder teilweise geknickten Zustand durch Spritzgießen in dem Aufbauelement (1) aus Kunststoff eingebettet ist.

3. Elektrisch gesteuerter Spiegel nach Anspruch 2, **dadurch gekennzeichnet, dass** das Verstärkungselement (2) einen vieladrigen elektrischen Leiter für die Funktionen bildet, die durch die Mittel in dem Spiegelgehäuse zu verwirklichen sind.

4. Elektrisch gesteuerter Spiegel nach einem der vorangehenden Ansprüche, **dadurch gekennzeichnet, dass** das Aufbauelement (1) einen Freiraum (4) für die Mittel (27) aufweist, die zur relativen Einstellung der Spiegelplatte in Bezug auf das Spiegelgehäuse dienen.

5. Elektrisch gesteuerter Spiegel nach einem der vorangehenden Ansprüche, **dadurch gekennzeichnet, dass** das Aufbauelement einen einzigen Freiraum (3) für sowohl die Elektronikeinheit zur Steuerung der verschiedenen Funktionen als auch die Mittel zur Einstellung der Spiegelplatte in Bezug auf das Spiegelgehäuse aufweist.

6. Elektrisch gesteuerter Spiegel nach einem der vorhergehenden Ansprüche, **dadurch gekennzeichnet, dass** das Aufbauelement einen Freiraum (3) aufweist, in dem, gemeinsam mit einem Raum in einem Befestigungsgrundelement in dem Träger, die Mittel zur Einstellung des Spiegelgehäuses in Bezug auf den Träger untergebracht sind.

7. Elektrisch gesteuerter Spiegel nach einem der vorhergehenden Ansprüche, **dadurch gekennzeichnet, dass** das Aufbauelement (1) einen oder mehrere weitere Räume (13) für Beleuchtungsmittel (33) aufweist.

8. Elektrisch gesteuerter Spiegel nach einem der vorhergehenden Ansprüche, **dadurch gekennzeichnet, dass** der elektrische Leiter einen Eingangsleiter (14) mit zwei Speiseleitungen und wenigstens einer Datenleitung aufweist.

9. Elektrisch gesteuerter Spiegel nach Anspruch 8, **dadurch gekennzeichnet, dass** über die Datenleitung oder -leitungen digitale serielle Daten im Multiplexverfahren von dem Fahrzeug zu der Elektronikeinheit übertragen werden und durch diese Elektronikeinheit über jeweilige Adern in dem elektrischen Leiter Steuerungssignale ausgegeben werden, um die verschiedenen Komponenten in dem Spiegelgehäuse zu steuern.

10. Elektrisch gesteuerter Spiegel nach einem der vorhergehenden Ansprüche, **dadurch gekennzeichnet, dass** über den Raum in dem Befestigungsgrundelement in dem Träger der von dem Fahrzeug kommende Kabelsatz des Spiegels an den in dem Aufbauelement (1) integrierten elektrischen Leiter angeschlossen werden kann.

11. Elektrisch gesteuerter Spiegel nach Anspruch 10, **dadurch gekennzeichnet, dass** die Verbindung des Kabelsatzes zwischen dem Fahrzeug und dem elektrischen Leiter sich durch die Welle (12) hindurch erstreckt, über die das Spiegelgehäuse in Bezug auf den Träger des Fahrzeugs verschwenkt werden kann.

12. Elektrisch gesteuerter Spiegel nach Anspruch 11, **dadurch gekennzeichnet, dass** in der Welle ein Steckverbinder (14) vorgesehen ist, an den der von dem Fahrzeug herrührende Kabelsatz angeschlossen ist, und dass der elektrische Leiter einen Stecker umfasst, der beim Überschieben des Aufbauelements über das Befestigungsgrundelement in den Steckverbinder (14) eingesteckt wird.

13. Elektrisch gesteuerter Spiegel nach Anspruch 4 und 5, **dadurch gekennzeichnet, dass** die Mittel zur Einstellung der Spiegelplatte in Bezug auf das Spiegelgehäuse an einer Befestigungsplatte (22) angeordnet sind und dass der Freiraum für diese Mittel vorstehende, in Gestalt von Bolzen ausgebildete Teile (23) umfasst, die in einem Stück mit dem Aufbauelement (1) ausgebildet sind und an denen die Befestigungsplatte (22) mittels einer Klemmverbindung (28) gesichert werden kann.

14. Elektrisch gesteuerter Spiegel nach Anspruch 13, **dadurch gekennzeichnet, dass** die Klemmverbindung (28) mittels eines Clips bewerkstelligt wird, der an der Befestigungsplatte befestigt ist.

15. Elektrisch gesteuerter Spiegel nach Anspruch 13, **dadurch gekennzeichnet, dass** die bolzenförmigen Teile (23) einen breiteren Abschnitt (24) und in der Nähe des freien Endes einen schmäleren Abschnitt (25) aufweisen, wobei die Befestigungsplatte, wenn sie über den schmäleren Abschnitt geschoben worden ist, zwischen der oberen Kante des breiteren Abschnitts und einem für die Antriebsmittel (27) zum Einstellen der Spiegelplatte vorgesehenen Abdeckelement (26) eingeklemmt ist, wobei die Antriebsmittel (27) an der Befestigungsplatte (22) anzuordnen sind und wobei das Abdeckelement mittels einer Klemmverbindung gesichert ist.

16. Elektrisch gesteuerter Spiegel nach Anspruch 15, **dadurch gekennzeichnet, dass** die Klemmverbindung (28) mittels eines an dem Deckelelement befestigten Clips bewerkstelligt ist.

17. Elektrisch gesteuerter Spiegel nach einem der Ansprüche 13-16, **dadurch gekennzeichnet, dass** die Elektronikeinheit zur Steuerung der verschiedenen Funktionen an der Befestigungsplatte (22) angeordnet ist.

18. Elektrisch gesteuerter Spiegel nach Anspruch 13, **dadurch gekennzeichnet, dass** wenigstens ein Teil der Elektronik der Elektronikeinheit auf der anderen Seite der Befestigungsplatte (22) positioniert ist, auf der die Mittel (27) zur Einstellung der Spiegelplatte in Bezug auf das Spiegelgehäuse vorgesehen sind.

## Revendications

1. Miroir commandé électriquement pour un véhicule à moteur, muni d'un support devant être monté sur un véhicule pour un logement de miroir ayant une plaque-miroir mobile dans ledit logement de miroir et des moyens électromécaniques pour régler le logement de miroir par rapport au support et la plaque-miroir par rapport au logement de miroir, et avec n'importe quels moyens pour loger une ou plusieurs autres fonctions, telles que le chauffage du miroir, la gradation électrochrome de l'intensité lumineuse appliquée au niveau de la plaque-miroir, diverses fonctions d'éclairage, des moyens de commande à distance, etc. dans le logement de miroir, le logement de miroir comprenant un seul élément intégré (1) sur lequel lesdits moyens sont disposés, **caractérisé en ce qu'**un élément de renforcement (2) est disposé sur l'élément intégré (1) pour augmenter la rigidité et la résistance de l'élément intégré (1) et **en ce que** l'élément intégré a un espace (3) dans lequel est logée une unité électronique pour commander les diverses fonctions.

2. Miroir commandé électriquement selon la revendication 1, **caractérisé en ce que** l'élément intégré forme un tout et est fabriqué à partir d'une matière plastique, l'élément de renforcement (2) étant fait de métal et moulé par insertion, dans un état entièrement ou partiellement plié, dans l'élément intégré en matière plastique (1).

3. Miroir commandé électriquement selon la revendication 2, **caractérisé en ce que** l'élément de renforcement (2) forme un conducteur électrique à plusieurs âmes pour les fonctions à réaliser dans le logement de miroir par lesdits moyens.

4. Miroir commandé électriquement selon l'une quelconque des revendications précédentes, **caractérisé en ce que** l'élément intégré (1) a un espace (4) pour les moyens (27) pour régler la plaque-miroir par rapport au logement de miroir.

5. Miroir commandé électriquement selon l'une quelconque des revendications précédentes, **caractérisé en ce que** l'élément intégré a un espace (3) à la fois pour l'unité électronique pour commander les diverses fonctions et les moyens pour régler la plaque-miroir par rapport au logement de miroir.

6. Miroir commandé électriquement selon l'une quelconque des revendications précédentes, **caractérisé en ce que** l'élément intégré a un espace (3) dans lequel, en coopération avec un espace dans un élément de base de montage dans le support, sont logés les moyens pour régler le logement de miroir par rapport au support.

7. Miroir commandé électriquement selon l'une quelconque des revendications précédentes, **caractérisé en ce que** l'élément intégré (11) a un ou plusieurs autres espaces (13) pour des moyens d'éclairage (33).

8. Miroir commandé électriquement selon l'une quelconque des revendications précédentes, **caractérisé en ce que** le conducteur électrique comprend un conducteur d'entrée (14) avec deux lignes d'alimentation et au moins une ligne de données.

9. Miroir commandé électriquement selon la revendication 8, **caractérisé en ce que** sur la ou les lignes de données, des informations numériques en série sont transmises sur une base multiplexe du véhicule vers l'unité électronique et des signaux de commande sont fournis par cette unité électronique sur des âmes pertinentes dans le conducteur électrique pour commander les divers composants dans le logement de miroir.

10. Miroir commandé électriquement selon l'une quelconque des revendications précédentes, **caractérisé en ce que** via l'espace dans l'élément de base de montage dans le support, la câblerie du miroir peut être reliée du véhicule au conducteur électrique intégré dans l'élément intégré (1).

11. Miroir commandé électriquement selon la revendication 10, **caractérisé en ce que** la connexion de la câblerie du véhicule au conducteur électrique s'étend à travers l'arbre, arbre via lequel (12) le logement de miroir peut tourner par rapport au support sur le véhicule.

12. Miroir commandé électriquement selon la revendication 11, **caractérisé en ce que** ledit arbre est muni d'un connecteur (14) vers lequel la câblerie du véhicule est reliée et **en ce que** le conducteur électrique comprend une prise qui, lorsque l'élément intégré est coulissé sur l'élément de base de montage, est branchée dans Je connecteur (14).

13. Miroir commandé électriquement selon les revendications 4 et 5, **caractérisé en ce que** les moyens pour régler la plaque-miroir par rapport au logement de miroir sont disposés sur une plaque de montage (22) et **en ce que** l'espace pour ces moyens comprend des parties en forme d'axe, faisant saillie (23) qui forment un tout avec l'élément intégré (1) et sur lequel la plaque de montage (22) peut être fixée par une connexion par clip (28).

14. Miroir commandé électriquement selon - la revendication 13, **caractérisé en ce que** la connexion par clip (28) est obtenue par un clip disposé de manière fixe sur la plaque de montage.

15. Miroir commandé électriquement selon la revendication 13, **caractérisé en ce que** les parties en forme d'axe (23) comprennent une partie élargie (24) et, adjacente à l'extrémité libre, une partie rétrécie (25), la plaque de montage qui a été coulissée sur la partie rétrécie étant serrée entre le bord supérieur de ladite partie élargie et un élément formant couvercle (26) présent pour les moyens d'entraînement (27) pour régler la plaque-miroir, lesquels moyens d'entraînement (27) doivent être disposés sur la plaque de montage (22), l'élément formant couvercle étant fixé par une connexion par clip.

16. Miroir commandé électriquement selon la revendication 15, **caractérisé en ce que** la connexion par clip (28) est obtenue par un clip disposé de manière fixe sur l'élément formant couvercle.

17. Miroir commandé électriquement selon l'une quelconque des revendications 13 à 16, **caractérisé en ce que** l'unité électronique pour commander les diverses fonctions cst disposée sur la plaque de montage (22).

18. Miroir commandé électriquement selon la revendication 13, **caractérisé en ce qu'**au moins une partie des composants électroniques de l'unité électronique soit situés sur l'autre côté de la plaque de montage (22) où sont disposés les moyens (27) pour régler la plaque-miroir par rapport au logement de miroir.
